# EUROPEAN PATENT SPECIFICATION

(11) **EP 3 419 412 B1**
(45) Date of publication and mention of the grant of the patent: **10.04.2024**
(21) Application number: 17714507.5
(22) Date of filing: 24.02.2017
(51) Int. Cl.: A01G 31/02, A01G 31/04, A01G 24/50

(54) **FLEXIBLE HYDROPONICS CONTAINER**
FLEXIBLER HYDROKULTURBEHÄLTER
RÉCIPIENT DE CULTURE HYDROPONIQUE FLEXIBLE

(30) Priority: 26.02.2016 GB 201603409; 12.10.2016 GB 201617303
(43) Date of publication of application: 02.01.2019
(73) Proprietor: Red Sea Farms Limited, Abu Dhabi (AE)
(72) Inventor: DIXON, Adam David Lawrence, Pocklington East Riding of Yorkshire YO42 2GN (GB); PARKIN, Luke, Melbourne East Yorkshire YO42 2QE (GB)
(74) Representative: Greaves Brewster LLP
(86) International application number: PCT/GB2017/050493
(87) International publication number: WO 2017/144904

(56) References cited:
- EP-A1- 0 027 697
- EP-A1- 0 031 985
- EP-A1- 0 403 348
- WO-A1-97/17835
- WO-A1-2009/067194
- WO-A1-2012/050449
- WO-A2-2010/099431
- FR-A1- 2 641 442
- FR-A1- 2 712 140
- US-A- 2 431 063
- US-A- 3 962 823
- US-A- 5 946 854
- US-B1- 6 415 548

## Description

The present invention relates generally to the field of hydroponics. More specifically, the invention relates to a container, a kit, a plant cultivation system, a method and use of the container for the growing of plants in a substantially water-based environment.

### BACKGROUND

Plant roots require three main inputs for healthy growth: air, water and nutrients. As long as these inputs are provided, the root system does not need to be placed in soil. The growing of plants in a mineral solution, in place of soil, is known as hydroponics.

Such physical soilless systems typically house the plant and provide its roots with a nutrient solution (mineral nutrients and water) and oxygen. Using such a system aids growth due to the ability to optimise the provision of water, air and nutrients to the roots. Another advantage of such systems is the ability to have greater control over pathogens and other microorganisms, either in terms of defence or in terms of introducing beneficial microorganisms to encourage symbiosis or neutrality.

A system using nutrient solution in a fluid stage can be better controlled to balance nutrients, oxygen and other conditions, such that improved growth characteristics can be obtained compared to soil-grown plants. With soilless methods, dense and fine root structures can be developed by the plant, thereby optimising and facilitating transport through the xylem. Moreover, the addition of adequate oxygen to a nutrient solution or the use of aerosol solution prevents the respiratory death of cells in the root and prevents root rot and pathogenesis, by maintaining healthy root immune systems.

In commercial applications, of primary concern is the maximising of production in the shortest time possible. In order to achieve this aim, various systems to optimise uptake of the nutrient solution have been tried (both for domestic and commercial applications), but the available products are complex to use and bulky. Some of the known systems also have a water/root interface requiring the addition of an inert aggregate, which can lead to increased costs. Another disadvantage of the known hydroponic systems is that they do not adequately achieve an optimum balance between air, nutrients and water. A further disadvantage of the known hydroponic systems is that they are bulky, which makes them difficult to move and leads to increased manufacturing, storage and transportation costs.

United States patent number 3,962,823 describes a planting bag in the form of a tube constructed from a flexible material and having sealed ends. Indicia on the bag indicate where to create an opening. French patent document FR 2 641 442 describes a flexible container for growing plants, in which the plants are grown on a medium of superabsorbent particles.

It is therefore the object of the invention to solve the aforementioned problems and to provide a hydroponics system, which is simpler to manufacture, transport and store and easier to use than available hydroponics systems. It is a further object of the invention to optimise the water/root interface.

### SUMMARY OF THE INVENTION

According to the present invention, there is provided a flexible container for growing plants hydroponically, wherein the container comprises:
(i) a detachable top part comprising one or more openings **1** for receiving plants and/or seeds;
(ii) one or more openings **5** for receiving a nutrient and/or water and air supply, which openings may be the same or different to the openings of (i); characterised in that the container further comprises
(iii) an integrated aerator **7;** and
(iv) one or more porous layers or elements **9** inside the container for dispersing nutrients and/or cleaning solution throughout the container.

The present invention also provides a plant cultivation system comprising a plurality of containers of the invention.

Also provided is a method for growing plants hydroponically in a container according to the present invention.

Also provided is the use of a container according to the present invention for growing plants hydroponically and/or for altering root architecture.

Also provided is a kit comprising:
(i) a flexible container as defined in the appended claims; and
(ii) nutrients and/or a seed/plant supply; and
(iii) instructions for use.

### DETAILED DESCRIPTION

The invention is as described in the appended claims. Embodiments not falling under the scope of the appended claims are to be considered merely as examples suitable for understanding the invention.

According to a first aspect of the present invention, there is provided a flexible container for growing plants hydroponically, comprising:
(i) a detachable top part comprising one or more openings **1** for receiving plants and/or seeds;
(ii) one or more openings **5** for receiving a nutrient and/or water and air supply, which openings may be the same or different to the openings of (i);
(iii) an integrated aerator **7;** and
(iv) one or more porous layers or elements **9** inside the container for dispersing nutrients and/or cleaning solution throughout the container.

The flexible container of the invention may be sac-like in form and may be substantially closed apart from the opening(s) for receiving the plants and/or seeds to be grown and the nutrient, water and air supply. In such a container of sac-like form, defining a 'top' end and a 'bottom' end is rather context-dependent. In general, however, reference to the 'top', 'top end', `top part' etc. of the container is taken to mean the end from which shoots emerge (and preferably also where plants/seeds are introduced) and the 'bottom', 'bottom end' or 'base' etc. of the container is the end closest to the roots and is generally the end opposite to the 'top'. The container need not be sac-like in form, but may be any configuration which allows for the holding, containing and growing of plants in a substantially water-based or soil-free environment.

The container, or at least the main body of the container, may be made from any non-porous or low-porous substantially flexible material capable of holding liquid contents without any substantial leakage or escape. Suitable materials include a variety of plastics or other polymers, fibre-reinforced polymers, rubber, composite materials, foams, multi-layer flexible laminates (which may be reinforced with aluminium), woven materials or a combination of any of the aforementioned materials. The polymer may be a smart polymer capable of stiffening upon contact with water and regaining its flexible properties in a dry state, thereby making the container easier to transport and store. The container body may also incorporate flexible electronic circuits or other electronic devices, such as sensors, transponders, RFID tags etc. Incorporated onto or into the container body may also be reflective layers, smart materials, illustrations, graphics, barcodes, etc. Furthermore, it is known that the growth of some species of plants may not respond favourably to certain types of plastics and so the choice of material may also be tailored according to the specific requirements of the species to be grown.

According to one embodiment, the container or at least a part thereof may be inflatable (and deflatable). A container capable of inflation may therefore comprise at least one inner sealed chamber. The container or container part may be inflatable to varying degrees to create a container of adjustable size (volume, height and/or width).

The flexible, but resilient nature of the aforementioned materials allows for the container of the invention to be rolled up, folded, deflated, compressed etc. for storage and transport and then inflated or otherwise opened up, arranged or assembled for use. When the container is no longer needed, it may be deflated, folded or rolled up for storage ready for reuse. Advantageously, the light-weight and compact nature of the flexible container allows for reduced transportation costs.

Moreover, the container may be made of transparent, translucent or opaque material or of materials chosen to optimise the selective absorption and/or reflection of light or of light of certain wavelengths, which choice of materials may be tailored according to the requirements of the plants to be grown and/or taking into account any relevant seasonal or other environmental factors. The container may be made of a combination of the aforementioned materials. For example, the top of the container may be transparent or translucent to maximise access to light and/or to aid visual inspection by the user of the upper plant parts. Similarly, the sides of the container may be transparent to aid (visual or electronic) inspection of the plant roots. Furthermore, the interior walls of the container may be impregnated with antimicrobials or other desired agents designed to optimise growth.

According to one embodiment, the opening(s) for receiving plants and/or seeds may be in the form of one or more holes for receiving pots, plants or seeds. The opening(s) may be preformed or may be made by the user by, for example, cutting an opening in the flexible container. The opening(s) may also comprise a resealable joint used to access the container interior. The opening(s) may also be indicated by perforations. The use of perforations is particularly advantageous as it allows for the opening size to be controlled as the plant grows and to accommodate a variety of plant sizes and to hold them in place, while at the same time minimising water loss through evaporation or spillage or contamination from external agents. The perforations may be pre-manufactured with suitable guidance printed on the container on where to tear and insert the organism to be grown.

According to another embodiment, part of the container, preferably the top part comprising the one or more openings for receiving plants and/or seeds, is detachable, in whole or in part. The detachable container part (preferably the container top) may comprise fasteners or the like for connecting it to the rest of the container (preferably to the container base). The fastener(s) may be in any form which allows for the rapid attachment and detachment of the detachable container part to the rest of the container and may include zips, Velcro^{®}, hooks, loops, clips, buckles, buttons, toggle arrangements, magnets etc. Advantageously, a removable part allows for increased access to the insides of the container, which may facilitate cleaning of the container between uses and aid planting, harvesting and inspection (either visually or electronically) or treatment of the plant, including roots. A detachable top part of the container may also come pre-prepared and impregnated with seeds on a suitable layer, such as netting, gauze, felt or the like. The detachable part may also comprise elements to aid seed germination (such as a wicking organism support module) or may be configured with holes or suitable porous material for larger organisms or may be integrated with sensing or accessory features.

Therefore according to a further embodiment of the present invention, there is provided a detachable container part (preferably a detachable top), preferably comprising one or more openings for receiving plants and/or seeds and comprising one or more fasteners or the like, wherein the container top is preferably impregnated with seeds.

According to a further embodiment, the container of the invention may be used in conjunction with a cloche or the like, preferably such that the cloche may be fixed to the container to create a substantially sealed environment, thereby creating a microenvironment or mini greenhouse effect.

According to a preferred embodiment, the interior of the container comprises one or more layers, which layers are preferably parallel to the opening(s) for receiving plants/seeds. The layers are preferably inert and pH neutral. Different layers can serve the same or different functions, such as are described further herein. The various internal layers are preferably separate, i.e. are not in direct contact or connection with each other. The internal layer(s) may be removable and/or may be integrated into the container interior. In the case of a removable layer, they may comprise suitable fasteners for attaching the layer to the container interior. The fasteners may be in the form of zips, Velcro^{®}, hooks, loops, clips, buckles, buttons, toggle arrangements, cables, magnets etc., such that the layer(s) can be detached from the container for the purposes of inserting organisms, removing organisms, inspecting the container interior, reconfiguring the use of the flexible container, or otherwise.

One such internal layer may be a porous, low density layer designed to maximise aeration. Suitable porous materials include any of the following: rock wool, perlite, vermiculite, pumice, gravel, sand, clay pellets, grow stones, coir, rice husks, wood fibre etc. The composition of the porous layers may also help optimise absorbance of the water and nutrients through capillary mechanisms. In order to maximise aeration, the porous layer may be placed in close proximity to the aerator and preferably over the top of the aerator. According to a preferred embodiment, a porous layer is fixed on or near the base of the container interior. Advantageously, the porous layer helps to create small bubbles (of the order of about 0.5mm, 1.0 mm, 1.5mm, 2.0mm, 2.5mm, 3.0mm, 3.5mm, 4.0mm, 4.5mm or 5.0mm or more in diameter), which small bubbles have been found to optimise oxygen delivery and uptake by plant roots. Aside from maximising aeration, the internal porous layers may also help to evenly distribute nutrients, cleaning solution etc. throughout the container.

Additionally or alternatively, an internal layer may be arranged to act as a scaffold to hold plant roots and/or shoots in place. Preferably, such a layer is porous and may therefore act as a scaffold and also aid dispersal of oxygen and nutrients throughout the container. Such a porous layer may again be arranged substantially horizontally and positioned so as to allow plant roots to growth through, i.e. to traverse, the porous layer, such that plant shoots grow substantially above the porous layer (and closer to the top of the container) and plant roots grow substantially below the porous layer (and closer to the base of the container). Suitable porous materials may be the same as those described above.

Additionally or alternatively, the interior may comprise a porous layer for holding seeds (and eventually seedlings) in place and in a dispersed fashion. Such a porous layer is preferably close to the opening of the container and may be integrated into the container top. A suitable porous layer for holding seeds may be in the form of netting, gauze, felt or the like, which may optionally be impregnated with growth factors to aid germination and/or to give the layer hydrophilic properties.

The layers need not be parallel to the opening(s) for receiving plants/seeds, but may be placed elsewhere and/or configured differently. They may, for example, be in the form of elements such as a columns, scaffolds or the like, so long as the elements are able to perform the required function of facilitating dispersal of oxygen, nutrients, cleaning solution etc. throughout the container and/or to act as a support for the roots and/or shoots and/or to hold seeds in a dispersed fashion.

Therefore according to the present invention there is provided a container as defined herein wherein the interior of the container comprises one or more porous layers and/or elements to aid dispersal of oxygen, nutrients, cleaning solution etc. throughout the container and/or to act as a support for the roots and/or shoots and/or to hold seeds in a dispersed fashion.

According to one embodiment, a container with at least two internal layers (or elements) is preferred. Preferably at least one layer or element is porous and facilitates the distribution of water, air and nutrients etc. throughout the container and the other (which is also preferably porous) acts as a scaffold for holding plants in place. The use of at least two porous, low density layers or elements is preferred so as to maximise the distribution of water, air and nutrients etc. throughout the container. Furthermore, the use of multiple porous layers or elements can help to create and maintain small air bubbles/gaps over an extended period.

A further advantage of porous layer(s) and/or elements is that the nutrient solution is able to reach the plant roots through the spray/splash mechanism of popping bubbles caused by aeration from the air fed porous material. In this way, the roots are consistently moist and with access to air. This offers a superior interface between the roots, air and nutrient solution through increasing available oxygen for the whole plant whilst separating water from the stem and leaf system of a plant.

Although the addition of the nutrient solution and/or air and/or water generates an outward pressure which will provide a degree of support to the container, additional mechanical support may be required. Therefore according to a further embodiment of the present invention, the container comprises or may be used in conjunction with an internal and/or external support structure to reinforce the container when in use.

The support may be integral to the container or may be separate therefrom. For example, a support which is separate from the flexible container may be brought in as and when additional support to the container or to certain parts of the container is required. An integral support on the other hand would form part of the container, forming a type of endoskeleton and/or exoskeleton.

Preferably, the support is in the form of at least one support chamber or protuberance. The support chamber(s) or protuberance may be made from a low-density material, preferably allowing it to float above the nutrient solution while providing support to the container. The support, chamber, support chamber or protuberance (which terms are used interchangeably herein) may be filled with a gas, liquid or solid to provide mechanical support and structure. The support chamber(s) are preferably air-filled and are substantially impenetrable to liquids and to the other container contents. The support chamber(s) may be inflatable and may be separately inflatable from the flexible container or simultaneously inflatable, whereby inflating the container also causes the support chamber(s) to inflate. The container or parts thereof (such as the support chambers(s), aerators etc.) may comprise (integrated) gas release modules to facilitate rapid inflation or aeration. Preferably, the support chamber is such that the compact nature of the container is not compromised and the container retains the ability to be rolled up, folded etc. and stored and rapidly deployed for use.

The support chamber(s) may be arranged horizontally, vertically, diagonally, or a combination thereof or they may be in the form of a spiral, helix, concertina or any other form which provides support to the container when in use. For example, the support chamber(s) (which may be internal and/or external) may be in the form of or comprise a collar surrounding the perimeter of the container or may be in the form of or comprise one or more vertical columns or dividers or the like extending from (and attached or attachable to) the top and bottom of the container. According to a preferred embodiment, the support chambers are in the form of, or comprise, two (internal or external) parallel tracks or tubes positioned at opposite sides of the container and which may be integral to the container or separate therefrom.

The support chamber(s) preferably allow a relatively constant internal distance to be maintained. For example, the diameter and other dimensions of the protuberance may set the distance between the nutrient solution and the supporting porous material.

Furthermore, the different parts within the container (support chamber(s), layers, elements etc.) may be arranged and integrated as necessary to facilitate the movement of gas and liquid through venturi effect, ultrasonic nebulization, or otherwise.

Advantageously, the container body and the support elements (chambers/protuberances) may all be made from the same material. Various parts of the container may however be made to be more hydrophobic or hydrophilic, depending on requirements.

According to an alternative embodiment of the invention, the external support may be in the form of an external frame, preferably made from a suitable plastics material or metal.

The nutrient, water and oxygen supplies are preferably integrated into the container of the invention. The terms 'air', 'oxygen', 'aerosol', 'aeration' are all used interchangeably herein to refer to the provision of oxygen to the growing plants. The tools and techniques for providing oxygen would be well known to those skilled in the art. The container comprises an integrated aerator that may comprise a small air-filled chamber, fed from a pneumatic or liquid air mixture supply and which may be arranged to supply air and/or water and/or nutrients inside the container or to at least a part thereof. Also provided is an outlet for drainage, which may be the same as the inlet for receiving water/nutrient solution/other liquids or may be a separate feature. The inlet/outlet may be provided through manufactured joints or holes in the container. Also present may be a valve or valves for inflation of the container and/or any support chambers.

Optionally, and depending on the intended use, the container may comprise one or more external and/or internal devices, such as hooks, loops, Velcro^{®}, electronic circuits, transponders, wheels, rollers, flotation aids or any other mechanical and/or electronic aids to facilitate the hanging, securing, staking, floating, locating, transporting, repositioning, rotation, programming or the connecting of multiple containers of the invention. Advantageously, a plurality of containers of the invention may be used in a growth production line, whereby one or more containers (or batches of containers) may be automatically or manually moved around a glasshouse or greenhouse to different workstations or to different parts of the glasshouse or greenhouse for seeding, transplanting, growing, flowering, fruiting, harvesting and cleaning or for any other process to be performed on the plant being grown or on the container itself.

The container of the invention may also be manufactured at relatively low cost compared to the manufacturing costs for conventional hydroponics apparatus which are generally bulky, rigid and heavy in nature. The container may be assembled, for example, from at least two substantially superimposed sheets of the aforementioned materials and sealed at the edges to create a substantially enclosed sac-like container. The sheets may be fixed and sealed at the edges by welding, gluing or by using any other suitable tools or techniques for creating a substantially water-tight and/or air-tight enclosure for retaining liquids and/or air, as required. The chambers may be produced in a similar way. The container and chambers may be manufactured using any conventional method, such as plastics extrusion, co-extrusion, blown film extrusion or any suitable soft goods manufacturing technique.

Also described (but not claimed) is a method for manufacturing a substantially flexible container for hydroponics, comprising:
(i) providing at least two sheets of a non-porous or low-porosity substantially flexible material;
(ii) superimposing the sheets; and
(iii) sealing the sheets so as to create a substantially enclosed sac-like container;
(iv) creating one or more openings.

The one or more openings created are suitable for receiving plants/seeds, a nutrient, water and oxygen supply, layers or elements and/or an inflation valve. The openings may be in the form of perforations, manufactured joints or holes in the container. The opening(s) may be ready to connect to any conventional aerator and water supply.

The container of the invention may be used to cultivate a variety of plants (including algae), both monocotyledonous and dicotyledonous plants. Particularly preferred are typical greenhouse plants and vegetables and other commercially important crops, such as aubergine, baby leaf, cucumber, dragon fruit (pitahaya), herbs, lettuce, pepper (capsicum), rocket, spinach, strawberry and tomato. The container of the invention may also be used to grow virtually any plant up to the point of harvest or at least up to the growth stage where it may be transplanted to the field. Using such a dual system combining hydroponics and conventional growth in the field may also give the juvenile plants a good head start in terms of root development, disease avoidance etc. and may contribute to increasing overall plant yields. The container of the invention may also advantageously be used to transport ready-to-harvest plants *in situ,* thereby minimising waste, especially of perishable plant products.

The container may also be used to cultivate a variety of non-plant species, such as any animal typically cultivated through aquaculture, such as fish, crustaceans, molluscs, aquatic plants etc. There is therefore provided use of a container as defined herein for aquaculture. Any reference herein to a container for hydroponics is also taken to mean a container suitable for aquaponics.

According to a further aspect of the present invention, there is provided a system of containers comprising a plurality of containers of the invention, optionally wherein one or more of the containers are connected physically and/or electronically. The system of containers may be arranged on a moving belt or may be stationary. The system of containers may be vertically arranged so as to maximise the use of space in, for example, a glasshouse or greenhouse setting. The containers may optionally be moved manually or may be programmed to move in response to certain predefined conditions, such as for harvesting, treatment, monitoring, replenishment of nutrients, for optimisation of light conditions etc. According to a further aspect of the present invention, there is provided is a method for growing plants hydroponically in a container according to the present invention, comprising the steps of:
a) introducing plants and/or seeds into a container or a container top as defined herein and supplying the container with water, oxygen and nutrients to support growth;
b) monitoring the plants and/or conditions in the container; optionally
c) adjusting the container and/or its internal contents to optimise plant growth.

The introduction of the plants or seeds into the container may be through the use of a detachable container top as defined herein, preferably one that is already pre-seeded. The container top would then be attached to the container base by means of suitable fasteners or the like. After introducing the water, nutrient and air supply, the plants are ready to grow.

The plants may be monitored by visual inspection or images of the plants may be taken and digitally analysed for development (germination, flowering, size etc.) or for disease or deficiency etc. The container conditions may also be monitored either manually or automatically to ensure an optimal balance of air, water and nutrients and to check for the presence of any undesirable agents. Following monitoring, the plants and/or the container contents may then be treated or adjusted as required.

According to a further aspect of the present invention, there is provided the use of a container according to the present invention for growing plants. According to a preferred embodiment, the container is used to alter the root architecture of plants. Due to the soil-free environment, dense and/or fine root structures can be developed by the plant, which could not otherwise be obtained due to the physical characteristics of soil and due to the existence of soil-borne organisms which may feed on plant roots. The altered root architecture obtained through the use of the container of the invention may allow the plants to take up nutrients in their environment in a more efficient manner, which may in turn contribute to faster plant growth and/or increased plant yield.

The container of the invention advantageously not only allows for reduced manufacturing and transportation costs, but also allows for reduced labour and operational costs due to the ease of use and in the reduction in time needed for seeding, planting, transplanting, growing, harvesting and cleaning.

### FIGURES

The present invention will now be described by way of example only and with reference to the accompanying illustrative drawings in which:
FIG. 1 shows an isometric view of the flexible container of the invention.
FIG. 2 shows an isometric layered view of the container.
FIG. 3 shows a cross section of the container in use.
FIG. 4 shows an isometric cross section of the container.
FIG. 5 shows a cross section of a further embodiment of the container of the invention.
FIG. 6 shows a cross section of a further embodiment of the container of the invention.
FIG. 7 shows a system view of multiple containers of the invention on a moving belt.
FIG. 8 shows a cross section of the container of the invention with a cloche.
FIG. 9 shows an isometric view of a further embodiment of the flexible container of the invention.
FIG. 10 shows a side view of the container shown in FIG. 9.
FIG. 11 shows a cross section of the container shown in FIGs 9 and 10.
FIG. 12 shows a cross section of the container shown in FIGs 9 and 10 with an expanded view of the chambers or protrusions.
FIG. 13 shows a side view of a larger container of the invention with multiple aerators.
FIG. 14 shows the process from start to a harvest stage.

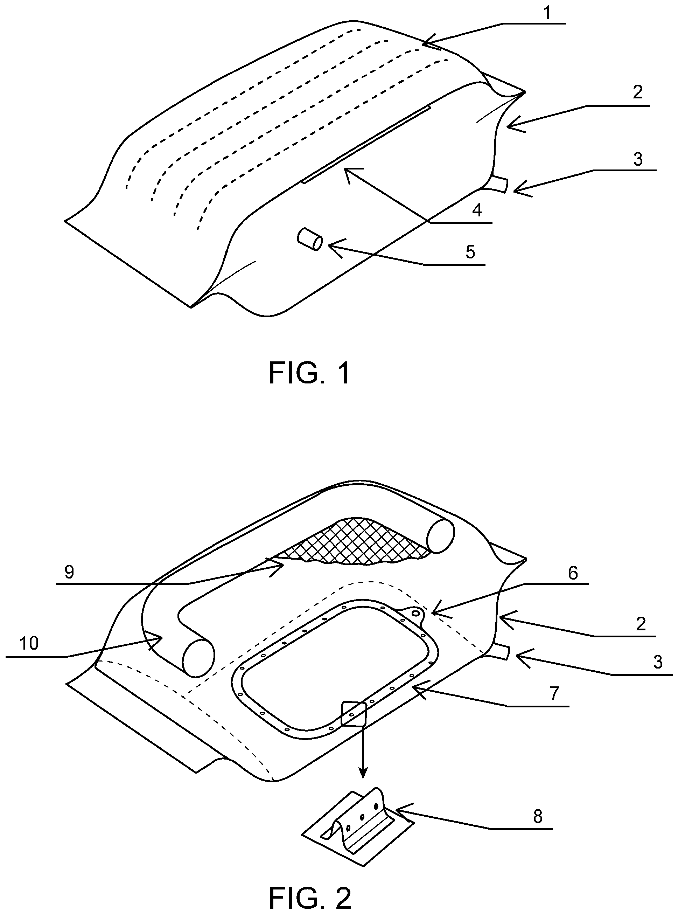

As illustrated, FIG. 1 shows the flexible hydroponics container **2,** which is made from a flexible nonporous material. The top end of the container comprises openings in the form of an array of perforations **1** to facilitate plant and/or seed entry into the container. The seeds may be evenly dispersed across a porous layer (not shown) which is suitably close to the opening to maximise access to air and light. **4** represents a fastener which allows the container to be opened and the top part of the container to be detached in whole or in part. A nutrient/water drain valve **3,** which can be open or isolated to control the level or quality of water or nutrient solution in conjunction with a feed valve **5** is also shown.

FIG. 2 illustrates the interior of the container in which is shown an integrated aerator system **7** connected to the inside base of the container **2** fed by air or air/liquid inlet valve **6** formed of a layered or cast perforated layer **8** producing aeration. Also shown is a porous material layer **9** and support layer (chamber) **10.**

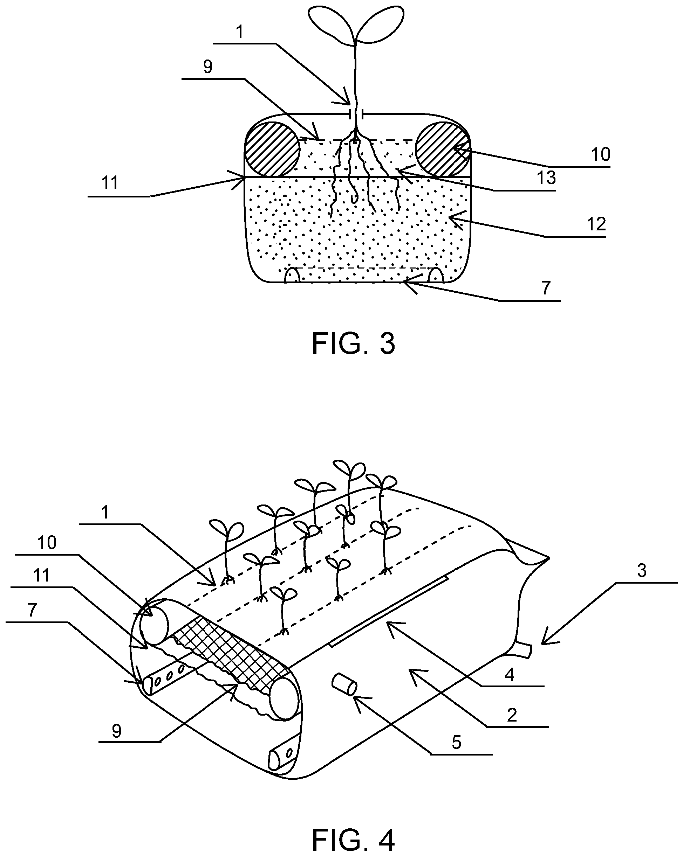

FIG. 3 and FIG. 4 show porous material layer **9** which supports plants whilst allowing water and air flow between an aerated nutrient liquid layer **11** and the top of the enclosure, layered with support layer (chamber) **10** such that a level of the liquid phase is maintained in an air gap **13** which has an aeroponic mist environment from aeration effervescence **12.**

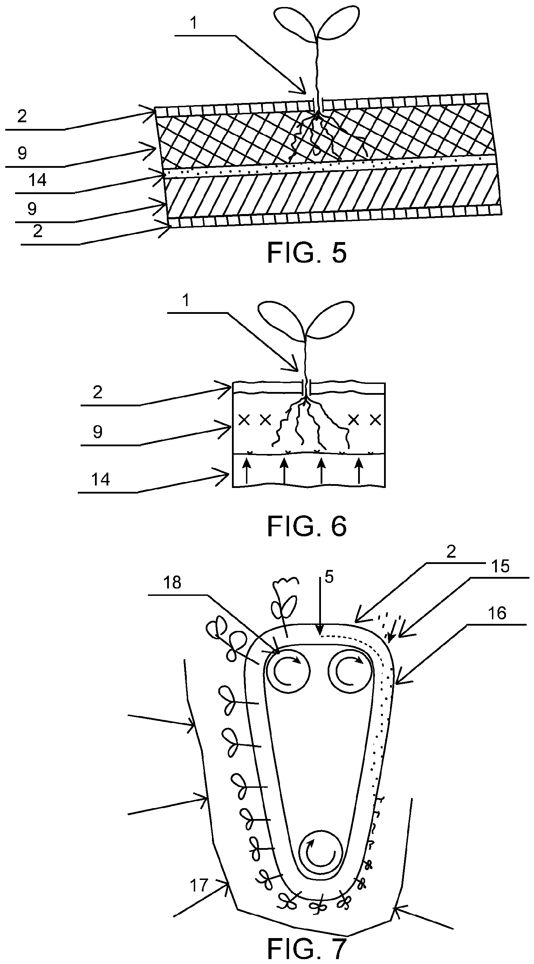

FIG. 5 and FIG. 6 show an alternative embodiment of the flexible hydroponic system in which the container need not be filled with water but where plants may be grown on porous layers **9** of expanded size. A porous liquid and air distribution layer **14** is fed by a feed valve **5** (not shown) designed through water potential and material selection to distribute liquid at a certain water potential level or otherwise into the porous layers **9.** Capillary action enables water uptake by the porous material and a high surface area aggregate surface can also be included for nutrient, water and air uptake, retention and distribution. Perforations **1** designed for plant input are also shown.

FIG. 7 shows a system comprising a series of containers **2** on a conveyor belt, which may be wall mounted or arranged horizontally. The containers are moved by mechanical force **18** allowing growth and harvesting to be organised. Seeds **15** or plantlets **16** can be added into the containers through perforations **1** (not shown) or through an opening formed in any other way. Growth is induced / facilitated with the help of the performance of the distribution layer **14** (not shown) in combination with light source **17,** which may be natural and/or artificial.

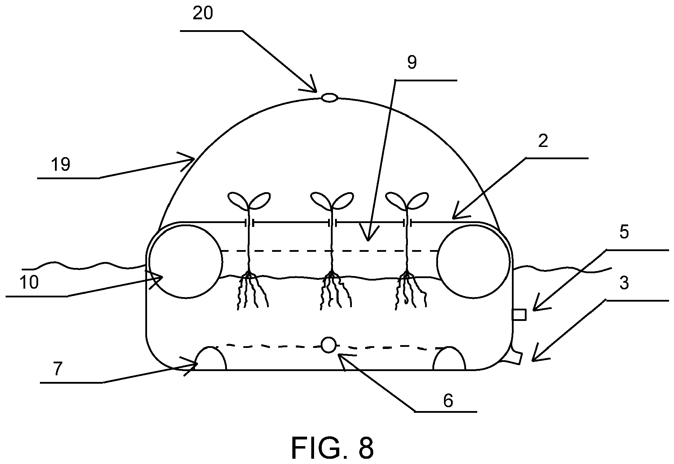

FIG. 8 shows a cross section view of the container **2** connected to a flexible transparent nonporous material **19** (shown in the form of a cloche, although it may be in any other suitable form) such that a sealed local environment is created which is conducive to biological life. Also shown is pressure valve **20,** which controls the pressure of the sealed local environment or causes it to unseal. A nutrient solution is introduced through feed valve **6,** also shown is an integrated aerator system **7** connected to the inside base of the container **2** fed by air or air/liquid inlet valve **6.** Also shown is a porous material layer **9** and support layer (chamber) **10.**

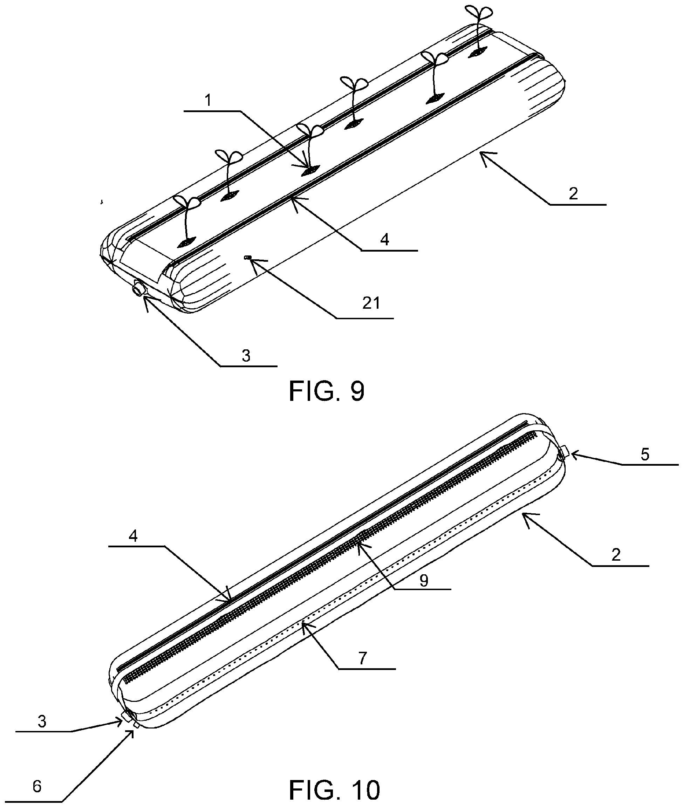

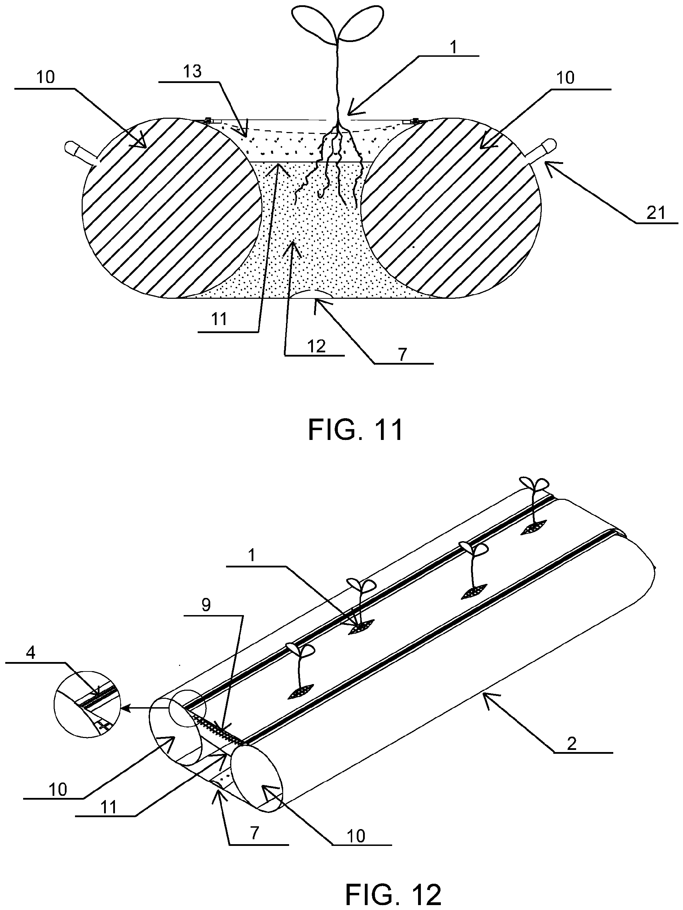

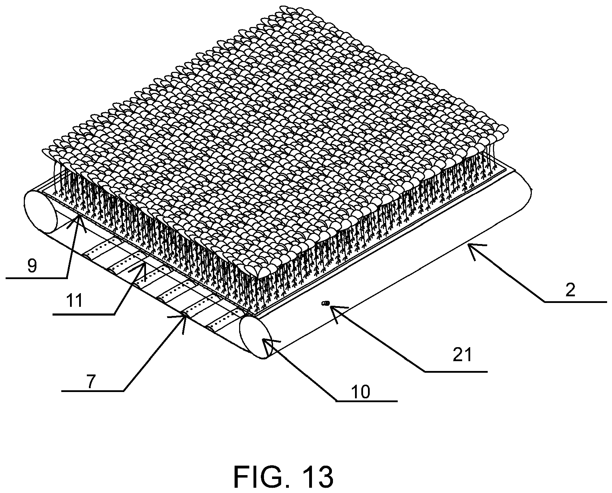

FIGs. 9, 10, 11, 12 and 13 show an embodiment of the invention comprising support elements or chambers **10** in the form of two parallel tracks. Plants are shown introduced through perforations or holes **1** or seeds may have previously been sown on porous material layer **9.** A nutrient solution is introduced through feed valve **6** and air through an integrated aerator **7** which aerates the nutrient liquid layer **11.** An air gap **13** is created between the top of the nutrient liquid layer **11** and the porous material layer **9.** In the air gap **13** the nutrient solution from nutrient liquid layer **11** is able to reach the plant roots through the spray/splash mechanism of popping bubbles caused by air fed through aerator **7** and surfacing to the top of layer **11.** In this way, the roots are consistently moist and with access to air, offering a superior interface between the roots, air and nutrient solution through increasing available oxygen for the whole plant whilst separating water from the stem and leaf system of a plant. Figure 12 shows an expanded view of the chambers **10** showing a fastener **4** (zip or the like) for detaching the top part of the container. Figure 13 shows a larger-style container with multiple aerators **7.** Also shown in FIG. 11 and 13 is inflation valve **21.**

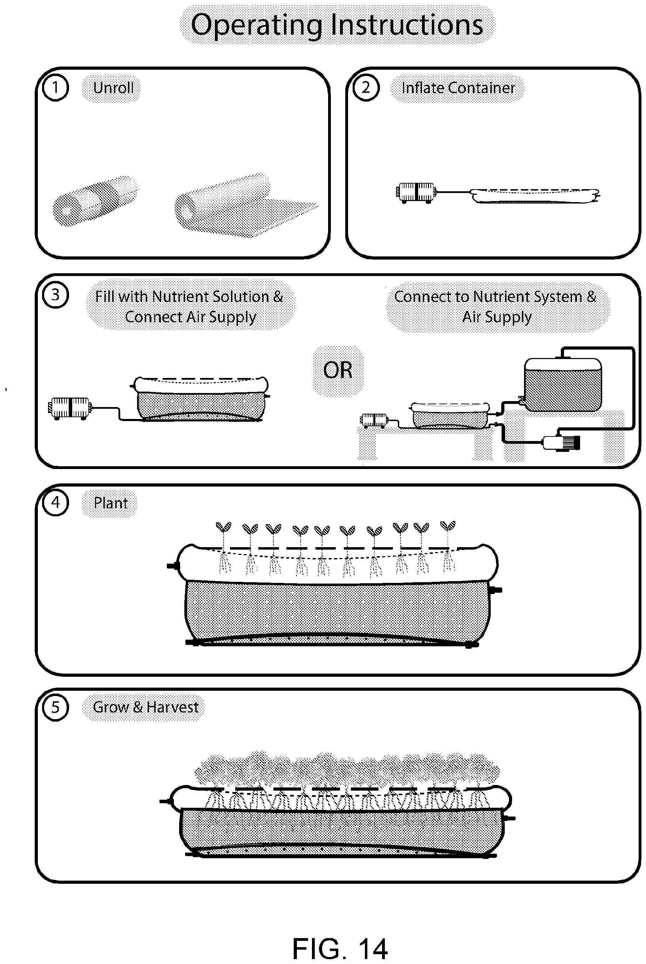

FIG. 14 shows a process starting with (1) a rolled up container being unrolled ready for inflation in (2). (3) shows the container in its inflated state ready for connection to an air, nutrient and water supply. (4) shows the container ready for the insertion of plants or seeds through the perforations in the top part of the container and (5) shows the plants growing in the container and the establishment of roots, with the plants being ready to harvest. Following harvest, the container may be cleaned and deflated and rolled up or folded ready for storage and reuse when needed.

Preferred features of the further aspects of the invention may be as described above in connection with the first aspect.

Throughout the description and claims of this specification, the words "comprise" and "contain" and variations of the words, for example "comprising" and "comprises", mean "including but not limited to", and do not exclude other moieties, additives, components, integers or steps.

Throughout the description the singular encompasses the plural unless the context otherwise requires. In particular, where the indefinite article is used, the specification is to be understood as contemplating plurality as well as singularity, unless the context requires otherwise.

Other features will become apparent from the following example Generally speaking the invention extends to the appended claims.

## Claims

1. A flexible container (2) for growing plants hydroponically, wherein the container comprises:
(i) a detachable top part comprising one or more openings (1) for receiving plants and/or seeds;
(ii) one or more openings (5) for receiving a nutrient and/or water and oxygen supply, which openings may be the same or different to the openings of (i); **characterised in that** the container further comprises
(iii) an integrated aerator (7); and
(iv) one or more porous layers or elements (9) inside the container for dispersing nutrients and/or cleaning solution throughout the container.

2. Container according to claim 1 which is substantially closed apart from said openings, wherein said container is a sac-like container.

3. Container according to any preceding claim which is capable of being inflated and/or deflated and/or rolled up and/or folded and/or compressed and/or extended.

4. Container according to any preceding claim, wherein said detachable top part comprises a porous layer impregnated with seeds.

5. Container according to claim 4, wherein said detachable top part is removably attached using one or more fasteners (4).

6. Container according to any preceding claim, wherein said one or more porous layers or elements (9) act as internal scaffold for the roots and/or shoots and/or to hold seeds, in a dispersed fashion, wherein said at least one layer or element (9) is present on said container base.

7. Container according to any preceding claim, further comprising an internal and/or external support integral to the container, and/or wherein said support comprises an inflatable chamber (10).

8. Container according to claim 7, wherein said inflatable chamber (10) comprises a collar around the periphery of the container and/or wherein said chamber comprises two parallel tracks on either side of the container.

9. Container according to any preceding claim, wherein said container and/or support chamber(s) according to claim 7 or 8, are made from any non- or low porous material, such as any plastics or other polymers, fibre-reinforced polymers, rubber, composite materials, foams, multi-layer flexible laminates, woven materials or a combination of any of the aforementioned materials.

10. A kit comprising:
(i) a flexible container according to any one of claims 1 to 9; and
(ii) nutrients and/or seed/plant supply; and
(iii) instructions for use.

11. A plant cultivation system, comprising a plurality of containers according to any one of claims 1 to 9, wherein one or more of the containers are connected physically and/or electronically and/or wherein the physically and/or electronically connected containers are arranged on a moving belt or may be arranged vertically and may be programmed to move in response to certain predefined conditions, such as for harvesting, treatment, monitoring, replenishment of nutrients, for optimisation of light conditions.

12. A method for growing plants hydroponically in a container according to any one of claims 1 to 9 or in a system according to claim 11, comprising the steps of:
a) introducing plants and/or seeds into said container and supplying the container with water, oxygen and nutrients for supporting life;
b) monitoring the plants and/or conditions in the container; and
c) adjusting the container and/or its internal contents to optimise growth.

13. Use of a container according to any one or claims 1 to 9 or system according to claim 11 for growing plants hydroponically and/or for altering the root architecture of plants and/or for aquaponics.

## Patentansprüche

1. Flexibler Behälter (2) zum Anbauen von Pflanzen in Hydrokultur, wobei der Behälter Folgendes umfasst:
(i) einen abnehmbaren oberen Teil, der eine oder mehrere Öffnungen (1) zum Aufnehmen von Pflanzen und/oder Samen umfasst;
(ii) eine oder mehrere Öffnungen (5) zum Aufnehmen einer Nährstoff- und/oder Wasser- und Sauerstoffversorgung, wobei die Öffnungen mit den Öffnungen von (i) identisch oder von diesen verschieden sein können;
**dadurch gekennzeichnet, dass** der Behälter ferner Folgendes umfasst
(iii) einen integrierten Belüfter (7); und
(iv) eine oder mehrere poröse Schichten oder Elemente (9) innerhalb des Behälters zum Verteilen von Nährstoffen und/oder Reinigungslösung im gesamten Behälter.

2. Behälter nach Anspruch 1, der abgesehen von den Öffnungen im Wesentlichen geschlossen ist, wobei der Behälter ein sackartiger Behälter ist.

3. Behälter nach einem vorhergehenden Anspruch, der in der Lage ist, aufgeblasen und/oder entleert und/oder aufgerollt und/oder gefaltet und/oder komprimiert und/oder ausgedehnt zu werden.

4. Behälter nach einem vorhergehenden Anspruch, wobei der abnehmbare obere Teil eine mit Samen imprägnierte poröse Schicht umfasst.

5. Behälter nach Anspruch 4, wobei der abnehmbare obere Teil unter Verwendung eines oder mehrerer Befestigungsmittel (4) entfernbar angebracht ist.

6. Behälter nach einem vorhergehenden Anspruch, wobei die eine oder mehreren porösen Schichten oder Elemente (9) als inneres Gerüst für die Wurzeln und/oder Sprosse dienen und/oder dazu dienen, Samen in verteilter Form zu halten, wobei die mindestens eine Schicht oder das mindestens eine Element (9) auf dem Behälterboden vorhanden ist.

7. Behälter nach einem vorhergehenden Anspruch, ferner eine innere und/oder äußere Stütze umfassend, die mit dem Behälter einstückig ist, und/oder wobei die Stütze eine aufblasbare Kammer (10) umfasst.

8. Behälter nach Anspruch 7, wobei die aufblasbare Kammer (10) einen Rand um den Umfang des Behälters herum umfasst und/oder wobei die Kammer zwei parallele Schienen auf beiden Seiten des Behälters umfasst.

9. Behälter nach einem vorhergehenden Anspruch, wobei der Behälter und/oder die Stützkammer(n) nach Anspruch 7 oder 8 aus einem beliebigen porenfreien oder porenarmen Material hergestellt sind, wie etwa Kunststoffen oder anderen Polymeren, faserverstärkten Polymeren, Gummi, Verbundmaterialien, Schäumen, mehrschichtigen flexiblen Laminaten, gewebten Materialien oder einer Kombination aus den vorstehend genannten Materialien.

10. Kit, umfassend:
(i) einen flexiblen Behälter nach einem der Ansprüche 1 bis 9; und
(ii) Nährstoffe und/oder Samen-/Pflanzenversorgung; und
(iii) Gebrauchsanweisungen.

11. Pflanzenkultivierungssystem, umfassend eine Vielzahl von Behältern nach einem der Ansprüche 1 bis 9, wobei einer oder mehrere der Behälter physisch und/oder elektronisch verbunden sind und/oder wobei die physisch und/oder elektronisch verbundenen Behälter auf einem sich bewegenden Band angeordnet sind oder vertikal angeordnet sein können und so programmiert sein können, dass sie sich als Reaktion auf bestimmte vordefinierte Bedingungen bewegen, wie etwa zur Ernte, Behandlung, Überwachung, Nachfüllung von Nährstoffen, zur Optimierung der Lichtbedingungen.

12. Verfahren zum Anbauen von Pflanzen in Hydrokultur in einem Behälter nach einem der Ansprüche 1 bis 9 oder in einem System nach Anspruch 11, die folgenden Schritte umfassend:
a) Einbringen von Pflanzen und/oder Samen in den Behälter und Versorgen des Behälters mit Wasser, Sauerstoff und Nährstoffen zum Unterstützen des Lebens;
b) Überwachen der Pflanzen und/oder Bedingungen in dem Behälter; und
c) Anpassen des Behälters und/oder seines inneren Inhalts, um das Wachstum zu optimieren.

13. Verwendung eines Behälters nach einem der Ansprüche 1 bis 9 oder eines Systems nach Anspruch 11 zum Anbauen von Pflanzen in Hydrokultur und/oder zum Verändern der Wurzelarchitektur von Pflanzen und/oder für die Aquaponik.

## Revendications

1. Récipient flexible (2) destiné à la culture de plantes de manière hydroponique, ledit récipient comprenant :
(i) une partie supérieure amovible comprenant une ou plusieurs ouvertures (1) destinées à recevoir des plantes et/ou des graines ;
(ii) une ou plusieurs ouvertures (5) destinées à recevoir un apport de nutriments et/ou d'eau et d'oxygène, lesquelles ouvertures peuvent être identiques ou différentes des ouvertures de (i) ; **caractérisé en ce que** le récipient comprend en outre
(iii) un aérateur intégré (7) ; et
(iv) une ou plusieurs couches ou éléments poreux (9) à l'intérieur du récipient destinés à disperser des nutriments et/ou une solution de nettoyage dans tout le récipient.

2. Récipient selon la revendication 1, qui est sensiblement fermé à l'écart desdites ouvertures, ledit récipient étant un récipient en forme de sac.

3. Récipient selon une quelconque revendication précédente, qui est capable d'être gonflé et/ou dégonflé et/ou enroulé et/ou plié et/ou comprimé et/ou étendu.

4. Récipient selon une quelconque revendication précédente, ladite partie supérieure amovible comprenant une couche poreuse imprégnée de graines.

5. Récipient selon la revendication 4, ladite partie supérieure amovible étant fixée de manière amovible à l'aide d'un ou plusieurs éléments de fixation (4).

6. Récipient selon une quelconque revendication précédente, ladite ou lesdites couches ou ledit ou lesdits éléments (9) poreux agissant en tant qu'échafaudage interne pour les racines et/ou les pousses et/ou pour retenir les graines, de manière dispersée, ladite au moins une couche ou ledit au moins un élément (9) étant présent sur ladite base de récipient.

7. Récipient selon une quelconque revendication précédente, comprenant en outre un support interne et/ou externe intégré au récipient, et/ou ledit support comprenant une chambre gonflable (10).

8. Récipient selon la revendication 7, ladite chambre gonflable (10) comprenant un collier autour de la périphérie du récipient et/ou ladite chambre comprenant deux pistes parallèles de chaque côté du récipient.

9. Récipient selon une quelconque revendication précédente, ledit récipient et/ou chambre(s) de support selon la revendication 7 ou 8, étant fabriqués à partir d'un quelconque matériau non poreux ou peu poreux, tel que de quelconques plastiques ou autre polymères, polymères renforcés par des fibres, caoutchouc, matériaux composites, mousses, stratifiés flexibles multicouches, matériaux tissés ou une combinaison de quelconques des matériaux susmentionnés.

10. Ensemble comprenant :
(i) un récipient flexible selon l'une quelconque des revendications 1 à 9 ; et
(ii) l'approvisionnement en nutriments et/ou en graines/plantes ; et
(iii) des instructions d'utilisation.

11. Système de culture de plantes, comprenant une pluralité de récipients selon l'une quelconque des revendications 1 à 9, un ou plusieurs des récipients étant raccordés physiquement et/ou électroniquement et/ou lesdits récipients raccordés physiquement et/ou électroniquement étant agencés sur un une bande mobile ou pouvant être agencés verticalement et pouvant être programmés pour se déplacer en réponse à certaines conditions prédéfinies, telles que pour la récolte, le traitement, la surveillance, la reconstitution des nutriments, pour l'optimisation des conditions d'éclairage.

12. Procédé permettant la culture de plantes de manière hydroponique dans un récipient selon l'une quelconque des revendications 1 à 9 ou dans un système selon la revendication 11, comprenant les étapes de :
a) introduction de plantes et/ou de graines dans ledit récipient et approvisionnement du récipient en eau, oxygène et nutriments nécessaires au maintien de la vie ;
b) surveillance des plantes et/ou des conditions dans le récipient ; et
c) réglage du récipient et/ou de son contenu interne pour optimiser la croissance.

13. Utilisation d'un récipient selon l'une quelconque des revendications 1 à 9 ou d'un système selon la revendication 11 en vue de la culture de plantes de manière hydroponique et/ou de la modification de l'architecture racinaire de plantes et/ou pour l'aquaponie.
